# FASCICULE DE BREVET EUROPEEN

(11) **EP 4 158 177 B1**
(45) Date de publication et mention de la délivrance du brevet: **15.05.2024**
(21) Numéro de dépôt: 21720798.4
(22) Date de dépôt: 25.03.2021
(51) Int. Cl.: F02D 41/22, F02D 33/00, F02D 29/02

(54) **VÉHICULE À MOTEUR THERMIQUE À ESSENCE ET CONTRÔLE DU TYPE DE CARBURANT UTILISÉ, ET PROCÉDÉ DE CONTRÔLE ASSOCIÉ**
FAHRZEUG MIT BENZINVERBRENNUNGSMOTOR UND STEUERUNG DES VERWENDETEN KRAFTSTOFFTYPS UND ZUGEHÖRIGES STEUERUNGSVERFAHREN
VEHICLE WITH PETROL COMBUSTION ENGINE AND CONTROL OF THE TYPE OF FUEL USED, AND ASSOCIATED CONTROL METHOD

(30) Priorité: 25.05.2020 FR 2005525
(43) Date de publication de la demande: 05.04.2023
(73) Titulaire: Stellantis Auto SAS, 78300 Poissy (FR)
(72) Inventeur: TROPEE, Martin, 78260 ACHERES (FR)
(86) Numéro de dépôt international: PCT/FR2021/050528
(87) Numéro de publication internationale: WO 2021/240077

(56) Documents cités:
- DE-A1-102005 035 269
- DE-A1-102007 023 899
- JP-A- 2009 024 569
- US-A1- 2020 132 010
- US-B1- 6 260 411

## Description

### Domaine technique de l'invention

L'invention concerne les véhicules comprenant un moteur thermique consommant un carburant de type essence, issu d'un réservoir, pour fournir du couple pour les déplacer.

### Etat de la technique

De nombreux véhicules comprennent un groupe motopropulseur (ou GMP) comportant au moins un moteur thermique qui est alimenté en carburant de type essence, issu d'un réservoir, pour fournir du couple pour les déplacer. Parfois, lorsqu'une personne effectue un remplissage du réservoir (partiel ou complet), elle se trompe de type de carburant (gasoil au lieu d'essence) sans s'en apercevoir. Dans ce cas, lorsque le moteur thermique est remis en fonctionnement il est alimenté en carburant d'un mauvais type ou d'un mélange de types pour lequel il n'a pas été conçu, et donc se met à dysfonctionner plus ou moins rapidement. Ce dysfonctionnement alerte le conducteur, mais le temps que ce dernier met à décider d'arrêter de faire fonctionner le moteur thermique peut être plus ou moins long, et donc les dommages occasionnés à ce dernier peuvent être plus ou moins importants.

Actuellement, il n'existe pas de technique permettant de détecter rapidement une suspicion de remplissage du réservoir avec un type de carburant différent de l'essence pour laquelle le moteur thermique a été conçu. Seul existe parfois, mais pas systématiquement, une différence de dimensions entre les becs verseurs des pistolets d'alimentation en essence et en gasoil (en fait le bec verseur du pistolet d'alimentation en essence est moins large que celui du pistolet d'alimentation en gasoil). Mais malgré cette différence il arrive que des erreurs de remplissage se produisent.

Lorsqu'une telle erreur survient et que l'usager du véhicule a effectué une vidange complète du carburant puis remis de l'essence dans le réservoir, il est très difficile de détecter cette erreur cachée de façon certaine dans un service après-vente lorsque ce véhicule est apporté pour un problème de moteur thermique. Lorsque le véhicule est sous garantie et que l'erreur cachée n'a pas été détectée dans le service après-vente, les coûts de la réparation sont intégralement à la charge du constructeur du véhicule, alors même que ce type d'erreur n'est habituellement pas couvert par la garantie.

L'invention a donc notamment pour but d'améliorer la situation.

DE 10 2005 035269 A1 divulgue la détection d'erreur de remplissage en carburant d'un réservoir pour véhicules à moteur, qui implique l'émission d'un signal à partir d'un capteur de cliquetis si un mauvais carburant est fourni au moteur à combustion interne.

### Présentation de l'invention

Elle propose notamment à cet effet un véhicule comprenant un moteur thermique alimenté par au moins un injecteur en carburant de type essence, issu d'un réservoir, pour fournir du couple pour le déplacer, et un calculateur de supervision contrôlant l'alimentation et le fonctionnement de ce moteur thermique.

Ce véhicule se caractérise par le fait que son calculateur de supervision est agencé pour effectuer les opérations consistant, en cas de détection d'un remplissage du réservoir, à détecter, après une remise en fonctionnement du moteur thermique, quand ce dernier aura consommé une quantité de carburant égale à une valeur prédéfinie, puis, une fois cette détection réalisée, à analyser le fonctionnement du moteur thermique pendant une durée choisie, et, en cas de détection d'un dysfonctionnement du moteur thermique, à déclencher un stockage de données représentatives d'une suspicion de remplissage du réservoir avec un type de carburant différent de l'essence.

Grâce à l'invention, on dispose désormais de données de suspicion stockées qui peuvent ensuite être récupérées dans un service après-vente, par exemple suite à un problème de fonctionnement du moteur thermique, en vue d'être utilisées comme élément factuel servant à l'établissement du diagnostic par le service après-vente afin de proposer les meilleures solutions de dépannage au client.

Le véhicule selon l'invention peut comporter d'autres caractéristiques qui peuvent être prises séparément ou en combinaison, et notamment :
- la durée choisie d'analyse peut être comprise entre 100 secondes et 300 secondes ;
- il peut comprendre un capteur détectant chaque introduction d'un pistolet d'alimentation en carburant dans un conduit d'alimentation du réservoir et générant un message dédié chaque fois qu'il effectue une telle détection ;
- en variante, son calculateur de supervision peut être agencé pour effectuer les opérations consistant à comparer des première et seconde quantités de carburant présentes dans le réservoir respectivement juste avant le remplissage détecté et juste après une nouvelle mise en fonctionnement du moteur thermique, et à détecter un remplissage du réservoir lorsque la seconde quantité est supérieure à la première quantité ;
- en présence d'au moins deux injecteurs alimentant respectivement au moins deux cylindres, son calculateur de supervision peut être agencé pour effectuer les opérations consistant à décider qu'il y a un dysfonctionnement en cas de détection d'un dysfonctionnement dans chacun des cylindres ;
- son calculateur de supervision peut être agencé pour effectuer les opérations consistant à sommer chaque quantité de carburant injectée par chaque injecteur, et à détecter que le moteur thermique a consommé la valeur prédéfinie lorsque cette somme devient supérieure ou égale à cette valeur prédéfinie ;
- son calculateur de supervision peut être agencé pour effectuer les opérations consistant, en cas de détection d'un dysfonctionnement du moteur thermique, à générer un message destiné à informer un passager du véhicule d'une suspicion de remplissage du réservoir avec un type de carburant différent de l'essence, puis à déclencher un affichage de ce message sur au moins un écran présent dans le véhicule et/ou une diffusion de ce message par au moins un haut-parleur présent dans le véhicule ;
- il peut être de type automobile.

L'invention propose également un procédé de contrôle, d'une part, destiné à être mis en oeuvre dans un véhicule comprenant un moteur thermique alimenté par au moins un injecteur en carburant de type essence, issu d'un réservoir, pour fournir du couple pour le déplacer.

Ce procédé de contrôle se caractérise par le fait qu'il comprend une étape dans laquelle on détecte un remplissage du réservoir, puis, après une remise en fonctionnement du moteur thermique, on détecte quand ce dernier aura consommé une quantité de carburant égale à une valeur prédéfinie, puis, une fois cette détection réalisée, on analyse le fonctionnement du moteur thermique pendant une durée choisie, et, en cas de détection d'un dysfonctionnement du moteur thermique, on stocke des données représentatives d'une suspicion de remplissage du réservoir avec un type de carburant différent de l'essence. L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant pour contrôler, dans un véhicule comprenant un moteur thermique alimenté par au moins un injecteur en carburant de type essence, issu d'un réservoir, pour fournir du couple pour le déplacer, si le type de carburant alimentant le moteur thermique est de l'essence.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement, dans une vue de dessus, un exemple de réalisation d'un véhicule selon l'invention,
[Fig. 2] illustre schématiquement et fonctionnellement un exemple de réalisation d'un calculateur de supervision, et
[Fig. 3] illustre schématiquement un exemple d'algorithme mettant en oeuvre un procédé de contrôle selon l'invention.

### Description détaillée de l'invention

L'invention a notamment pour but de proposer un véhicule V comprenant un groupe motopropulseur (ou GMP) comportant au moins un moteur thermique MT alimenté par au moins un injecteur IN en carburant de type essence, et dans lequel on peut contrôler si le type de carburant alimentant le moteur thermique MT est de l'essence.

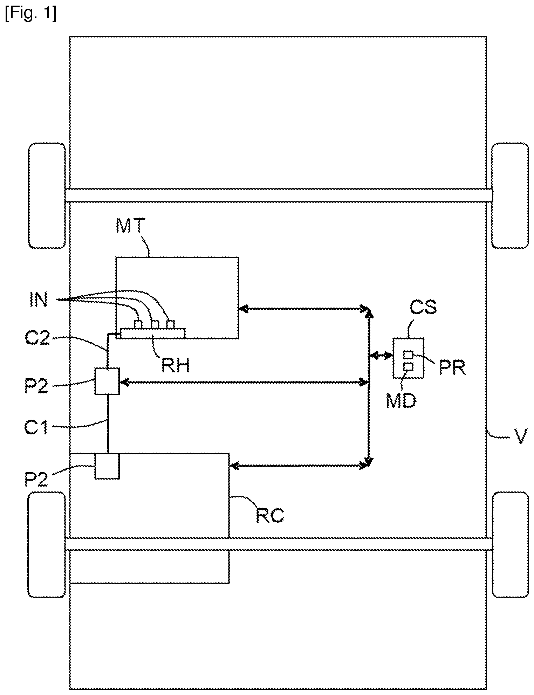

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule comprenant un groupe motopropulseur (ou GMP) comportant au moins un moteur thermique à essence. Ainsi, elle concerne tous les véhicules terrestres (utilitaires, camping-cars, minibus, cars, camions, motocyclettes, engins de voirie, engins de chantier, engins agricoles, engins de loisir (motoneige, kart), et engins à chenille(s)), les bateaux et les aéronefs.

On a schématiquement représenté sur la figure 1 un véhicule V, selon l'invention, comprenant un GMP comportant un moteur thermique MT à essence, et un calculateur de supervision CS propre à contrôler (ou superviser) l'alimentation et le fonctionnement d'au moins ce moteur thermique MT.

Le moteur thermique MT est alimenté par au moins un injecteur IN en carburant de type essence, issu d'un réservoir RC, afin de fournir du couple pour déplacer le véhicule V sur ordre du calculateur de supervision CS. Cette alimentation de chaque injecteur IN se fait ici via une première pompe P1 aspirant du carburant dans le réservoir RC pour alimenter en carburant à basse pression un premier conduit C1, une seconde pompe P2 à haute pression couplée au premier conduit C1 et alimentant en carburant à haute pression un second conduit C2, une rampe (ou un rail) haute pression RH couplé(e) au second conduit C2 et alimentant chaque injecteur IN en carburant sous haute pression. Les fonctionnements des première P1 et seconde P2 pompes et de chaque injecteur IN sont contrôlés (ou supervisés) par le calculateur de supervision CS.

Le calculateur de supervision CS est de plus agencé de manière à intervenir chaque fois qu'un remplissage du réservoir RC a été détecté. Dans ce cas, le calculateur de supervision CS est agencé pour effectuer les opérations consistant à détecter, après une remise en fonctionnement du moteur thermique MT, quand ce dernier MT aura consommé une quantité de carburant qct qui est égale à une valeur prédéfinie vp. Puis, une fois cette détection réalisée (et donc lorsque qct ≥ vp), le calculateur de supervision CS est agencé pour effectuer les opérations consistant à analyser le fonctionnement du moteur thermique MT pendant une durée choisie dc, et, en cas de détection d'un dysfonctionnement du moteur thermique MT, à déclencher un stockage de données qui sont représentatives d'une suspicion de remplissage du réservoir RC avec un type de carburant qui est différent de l'essence.

La valeur prédéfinie vp est, par exemple, la somme des quantités de carburant qui sont respectivement contenues dans la première pompe P1, le premier conduit C1, la seconde pompe P2, le second conduit C2, la rampe (ou rail) haute pression RH et chaque injecteur IN.

On notera que les quantités de carburant qui sont ici considérées peuvent être des volumes ou des masses.

On comprendra qu'à partir du moment où la quantité de carburant qct consommée devient égale à la valeur prédéfinie vp, on est certain que le carburant qui alimente chaque injecteur IN provient du réservoir RC et donc provient au moins en partie du remplissage venant d'être détecté. Par conséquent, on décide de surveiller le fonctionnement du moteur thermique MT pendant une durée choisie de débutant à l'instant où la condition qct ≥ vp devient satisfaite, car c'est à partir de cet instant que le carburant injecté risque de provoquer un dysfonctionnement du moteur thermique MT. Si un dysfonctionnement du moteur thermique MT est détecté pendant la durée choisie (d'analyse) de alors que son fonctionnement était normal avant le dernier remplissage de carburant, il y a une très forte probabilité que le nouveau carburant mis dans le réservoir RC ne soit pas de l'essence.

On entend ici par « dysfonctionnement » ce que l'on appelle fréquemment un raté (ou en anglais « misfire ») du moteur thermique MT. Ce phénomène correspond à une mauvaise combustion induisant des pressions dans les cylindres inférieures à la combustion normale et aboutissant à un déficit de couple moteur indiqué. Usuellement la détection s'appuie sur l'analyse en temps réel du régime moteur et du couple sensé être produit par le moteur thermique MT. Par application du principe fondamental de la dynamique il est possible de détecter toute incohérence, ce qui permet ensuite de déterminer si le fonctionnement du moteur thermique MT est normal ou anormal. Bien entendu ce type de détection d'incohérence n'est pas limitatif et d'autres types de détection d'incohérence existent (et sont bien connus de l'homme de l'art).

Les données de suspicion stockées se présentent par exemple sous la forme d'un code spécifique qui peut ensuite être récupéré dans un service après-vente lorsque le véhicule V est apporté, par exemple suite à un problème de fonctionnement de son moteur thermique MT. Ainsi, le constructeur automobile peut disposer d'une information importante et factuelle pour son analyse. Il peut en effet s'en servir dans un service après-vente pour établir un diagnostic et proposer les meilleures solutions de dépannage au client.

Par exemple, la durée choisie (d'analyse) de peut être comprise entre 100 secondes et 300 secondes. Ainsi, cette durée choisie (d'analyse) de peut, par exemple, être égale à 200 secondes.

La détection d'un remplissage peut se faire d'au moins deux façons.

Dans une première façon le véhicule V peut comprendre un capteur détectant chaque introduction d'un (bec de) pistolet d'alimentation en carburant dans le conduit d'alimentation de son réservoir RC, et générant un message dédié chaque fois qu'il effectue une telle détection. On comprendra que dans ce cas le message dédié (signalant l'introduction) est transmis au moins au calculateur de supervision CS, et donc ce dernier (CS) commencera à surveiller la quantité de carburant qct consommée par le moteur thermique MT dès la remise en fonctionnement de ce dernier (MT).

Dans une seconde façon c'est le calculateur de supervision CS qui effectue lui-même la détection. Plus précisément, dans ce cas le calculateur de supervision CS est agencé pour effectuer les opérations consistant à comparer la première quantité de carburant q1 présente dans le réservoir RC juste avant le remplissage détecté et la seconde quantité de carburant q2 présente dans le réservoir RC juste après la nouvelle mise en fonctionnement du moteur thermique MT, et à détecter le remplissage du réservoir RC lorsque cette seconde quantité q2 est supérieure à cette première quantité q1 (soit q2 > q1). On notera qu'en présence d'au moins deux injecteurs IN alimentant respectivement au moins deux cylindres, le calculateur de supervision CS peut être agencé pour effectuer les opérations consistant à décider qu'il y a un dysfonctionnement en cas de détection d'un dysfonctionnement dans chacun de ces cylindres. Si au moins un cylindre fonctionne normalement une fois le délai choisi de écoulé, alors le calculateur de supervision CS considère qu'il n'y a pas de dysfonctionnement global du moteur thermique MT, et donc ne déclenche pas de stockage de données de suspicion.

On notera également que le calculateur de supervision CS peut être agencé pour effectuer les opérations consistant à sommer chaque quantité de carburant qc injectée par chaque injecteur IN, et à détecter que le moteur thermique MT a consommé la valeur prédéfinie vp de carburant lorsque cette somme qct devient supérieure ou égale à cette valeur prédéfinie vp (soit qct = Σ(qc) ≥ vp).

On notera également que le calculateur de supervision CS peut être agencé pour stocker les données de suspicion (par exemple un code spécifique) dans une mémoire (éventuellement dédiée) qu'il comprend ou bien pour déclencher ce stockage dans une mémoire utilisée pour le stockage de nombreuses informations de vie du véhicule V. Dans ce dernier cas elle peut, par exemple, faire partie de ce que l'homme de l'art appelle parfois le boîtier de servitude intelligent (ou BSI - équipement de supervision). La transmission par le calculateur de supervision CS à la mémoire des messages contenant les codes de défaut se fait alors via un réseau de communication embarqué dans le véhicule V, et éventuellement multiplexé.

On notera également que le calculateur de supervision CS peut être agencé pour effectuer les opérations consistant, en cas de détection d'un dysfonctionnement du moteur thermique MT, à générer un message dédié qui est destiné à informer un passager du véhicule V d'une suspicion de remplissage du réservoir RC avec un type de carburant qui est différent de l'essence. Dans ce cas, le calculateur de supervision CS déclenche ensuite un affichage de ce message dédié sur au moins un écran présent dans le véhicule V et/ou une diffusion de ce message dédié par au moins un haut-parleur présent dans le véhicule V. L'affichage du message dédié peut se faire, par exemple, sur l'écran du combiné central ou du tableau de bord, ou bien sur l'écran d'un équipement de communication embarqué temporairement dans le véhicule V, pouvant communiquer avec au moins un calculateur de ce dernier (V), et accompagnant un passager, comme par exemple un téléphone mobile intelligent (ou « smartphone ») ou une tablette électronique communicante. La diffusion sonore du message dédié peut se faire, par exemple, par au moins un haut-parleur équipant de façon permanente le véhicule V ou bien un haut-parleur équipant un équipement de communication embarqué temporairement dans le véhicule V.

Afin d'assurer ses fonctions (et donc ses opérations), le calculateur de supervision CS comprend au moins un processeur PR, par exemple de signal numérique (ou DSP (« Digital Signal Processor »)), et au moins une mémoire MD. Le processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. La mémoire MD est vive afin de stocker des instructions pour la mise en oeuvre par le processeur PR d'une partie au moins du procédé de contrôle décrit plus loin. Le calculateur de supervision CS peut donc être réalisé sous la forme d'une combinaison de circuits ou composants électriques ou électroniques (ou « hardware ») et de modules logiciels (ou « software »).

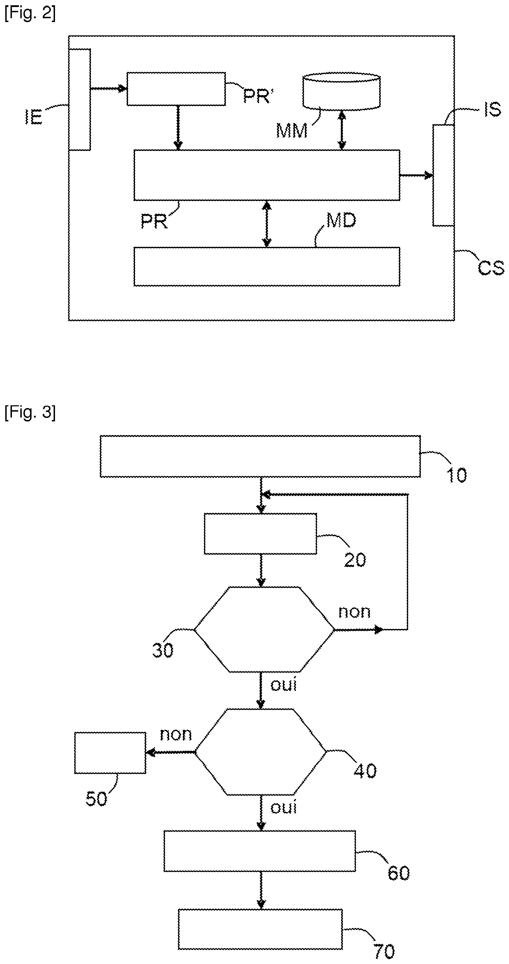

On notera également, comme illustré non limitativement sur la figure 2, que le calculateur de supervision CS peut aussi comprendre (en complément de sa mémoire vive MD et de son processeur PR), une mémoire de masse MM, notamment pour stocker les quantités de carburant qc successivement consommées (ou injectées) et les informations représentatives du fonctionnement du moteur thermique MT, et des données intermédiaires intervenant dans tous ses calculs et traitements. Par ailleurs, le calculateur de supervision CS peut aussi comprendre une interface d'entrée IE pour la réception d'au moins les quantités de carburant qc et les informations représentatives du fonctionnement du moteur thermique MT, pour les utiliser dans des calculs ou traitements, éventuellement après les avoir mises en forme et/ou démodulées et/ou amplifiées, de façon connue en soi, au moyen d'un processeur de signal numérique PR'. De plus, le calculateur de supervision CS peut aussi comprendre une interface de sortie IS, notamment pour délivrer ses messages et ordres (au moins pour le stockage des données de suspicion et les éventuels messages dédiés).

L'invention peut aussi être considérée sous la forme d'un procédé de contrôle destiné à être mis en oeuvre dans le véhicule V. Ce procédé de contrôle peut être mis en oeuvre au moins partiellement par le calculateur de supervision CS décrit ci-avant.

Ce procédé de contrôle comprend une étape 10-70 dans laquelle on commence par détecter un remplissage du réservoir RC. Puis, cette étape 10-70 se poursuit après une remise en fonctionnement du moteur thermique MT, par la détection quand ce dernier (MT) aura consommé une quantité de carburant égale à une valeur prédéfinie vp. Puis, cette étape 10-70 se poursuit une fois cette détection réalisée, par une analyse du fonctionnement du moteur thermique MT pendant une durée choisie dc. Puis, cette étape 10-70 se poursuit, en cas de détection d'un dysfonctionnement du moteur thermique MT, par le stockage de données représentatives d'une suspicion de remplissage du réservoir RC avec un type de carburant différent de l'essence.

On a schématiquement illustré sur la figure 3 un exemple d'algorithme mettant en oeuvre un procédé de contrôle selon l'invention.

L'algorithme comprend une sous-étape 10 dans laquelle on détecte un remplissage du réservoir RC.

Puis, dans une sous-étape 20, après une remise en fonctionnement du moteur thermique MT, on calcule la quantité de carburant qct consommée par le moteur thermique MT depuis le début de cette remise en fonctionnement, et dans une sous-étape 30 on compare cette quantité de carburant qct à une valeur prédéfinie vp.

Tant que la quantité de carburant consommée qct est inférieure à cette valeur prédéfinie vp (qct < vp), on retourne effectuer la sous-étape 20 pour mettre à jour la quantité de carburant consommée qct.

Lorsque la quantité de carburant consommée qct devient supérieure ou égale à la valeur prédéfinie vp (qct ≥ vp), on analyse dans une sous-étape 40 le fonctionnement du moteur thermique MT pendant une durée choisie dc.

En l'absence de détection d'un dysfonctionnement du moteur thermique MT durant la durée choisie dc, on interrompt l'algorithme (et donc le procédé de contrôle) dans une sous-étape 50.

En revanche, en cas de détection d'un dysfonctionnement du moteur thermique MT pendant cette durée choisie dc, on stocke dans une sous-étape 60 des données qui sont représentatives d'une suspicion de remplissage du réservoir RC avec un type de carburant différent de l'essence.

Puis, dans une sous-étape 70 on peut éventuellement avertir un passager du véhicule V de cette suspicion, au moyen d'un message dédié.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de contrôle décrit ci-avant pour contrôler après un remplissage du réservoir RC du véhicule V si le type de carburant alimentant son moteur thermique MT est de l'essence.

On notera également qu'une ou plusieurs sous-étapes de l'étape du procédé de contrôle peuvent être effectuées par des composants différents. Ainsi, le procédé de contrôle peut-être mis en oeuvre par une pluralité de processeurs de signal numérique, mémoire vive, mémoire de masse, interface d'entrée, interface de sortie.

## Revendications

1. Véhicule (V) comprenant un moteur thermique (MT) alimenté par au moins un injecteur (IN) en carburant de type essence, issu d'un réservoir (RC), pour fournir du couple pour le déplacer, et un calculateur de supervision (CS) contrôlant l'alimentation et le fonctionnement dudit moteur thermique (MT), ledit calculateur de supervision (CS) est agencé pour effectuer les opérations consistant, en cas de détection d'un remplissage dudit réservoir (RC), à détecter, après une remise en fonctionnement dudit moteur thermique (MT), quand ce dernier (MT) aura consommé une quantité de carburant égale à une valeur prédéfinie, puis, une fois cette détection réalisée, à analyser le fonctionnement dudit moteur thermique (MT) pendant une durée choisie, et, en cas de détection d'un dysfonctionnement dudit moteur thermique (MT), à déclencher un stockage de données représentatives d'une suspicion de remplissage dudit réservoir (RC) avec un type de carburant différent de l'essence.

2. Véhicule selon la revendication 1, **caractérisé en ce que** ladite durée choisie est comprise entre 100 secondes et 300 secondes.

3. Véhicule selon la revendication 1 ou 2, **caractérisé en ce qu'**il comprend un capteur détectant chaque introduction d'un pistolet d'alimentation en carburant dans un conduit d'alimentation dudit réservoir (RC) et générant un message dédié chaque fois qu'il effectue une telle détection.

4. Véhicule selon la revendication 1 ou 2, **caractérisé en ce que** ledit calculateur de supervision (CS) est agencé pour effectuer les opérations consistant à comparer des première et seconde quantités de carburant présentes dans ledit réservoir (RC) respectivement juste avant ledit remplissage détecté et juste après une nouvelle mise en fonctionnement dudit moteur thermique (MT), et à détecter un remplissage dudit réservoir (RC) lorsque ladite seconde quantité est supérieure à ladite première quantité.

5. Véhicule selon l'une des revendications 1 à 4, **caractérisé en ce qu'**en présence d'au moins deux injecteurs (IN) alimentant respectivement au moins deux cylindres, ledit calculateur de supervision (CS) est agencé pour effectuer les opérations consistant à décider qu'il y a un dysfonctionnement en cas de détection d'un dysfonctionnement dans chacun desdits cylindres.

6. Véhicule selon l'une des revendications 1 à 5, **caractérisé en ce que** ledit calculateur de supervision (CS) est agencé pour effectuer les opérations consistant à sommer chaque quantité de carburant injectée par chaque injecteur (IN), et à détecter que le moteur thermique (MT) a consommé ladite valeur prédéfinie lorsque ladite somme devient supérieure ou égale à cette valeur prédéfinie.

7. Véhicule selon l'une des revendications 1 à 6, **caractérisé en ce que** ledit calculateur de supervision (CS) est agencé pour effectuer les opérations consistant, en cas de détection d'un dysfonctionnement du moteur thermique (MT), à générer un message destiné à informer un passager dudit véhicule (V) d'une suspicion de remplissage dudit réservoir (RC) avec un type de carburant différent de l'essence, puis à déclencher un affichage dudit message sur au moins un écran présent dans ledit véhicule (V) et/ou une diffusion dudit message par au moins un haut-parleur présent dans ledit véhicule (V).

8. Véhicule selon l'une des revendications 1 à 7, **caractérisé en ce qu'**il est de type automobile.

9. Procédé de contrôle pour un véhicule (V) comprenant un moteur thermique (MT) alimenté par au moins un injecteur (IN) en carburant de type essence, issu d'un réservoir (RC), pour fournir du couple pour le déplacer, ledit procédé comprend une étape (10-70) dans laquelle on détecte un remplissage dudit réservoir (RC), puis, après une remise en fonctionnement dudit moteur thermique (MT), on détecte quand ce dernier (MT) aura consommé une quantité de carburant égale à une valeur prédéfinie, puis, une fois cette détection réalisée, on analyse le fonctionnement dudit moteur thermique (MT) pendant une durée choisie, et, en cas de détection d'un dysfonctionnement dudit moteur thermique (MT), on stocke des données représentatives d'une suspicion de remplissage dudit réservoir (RC) avec un type de carburant différent de l'essence.

10. Produit programme d'ordinateur comprenant un jeu d'instructions qui, lorsqu'il est exécuté par des moyens de traitement, est propre à mettre en oeuvre le procédé de contrôle selon la revendication 9 pour contrôler, dans un véhicule (V) comprenant un moteur thermique (MT) alimenté par au moins un injecteur (IN) en carburant de type essence, issu d'un réservoir (RC), pour fournir du couple pour le déplacer, si le type de carburant alimentant ledit moteur thermique (MT) est de l'essence.

## Patentansprüche

1. Fahrzeug (V), bestehend aus einem Wärmemotor (MT), der von mindestens einer Einspritzdüse (IN) mit benzinartigem Kraftstoff aus einem Tank (RC) angetrieben wird, um Drehmoment für seine Bewegung bereitzustellen, und einem Überwachungscomputer (CS), der die Leistung steuert Versorgung und Betrieb der Wärmekraftmaschine (MT), wobei der Überwachungscomputer (CS) so eingerichtet ist, dass er die Vorgänge ausführt, die darin bestehen, im Falle der Erkennung einer Füllung des Tanks (RC) nach einem Reset des Betriebs zu erkennen die Wärmekraftmaschine (MT), wenn diese (MT) eine einem vordefinierten Wert entsprechende Kraftstoffmenge verbraucht hat, nach Durchführung dieser Erfassung den Betrieb der Wärmekraftmaschine (MT) für eine gewählte Dauer zu analysieren und im Falle der Erkennung einer Fehlfunktion des Wärmemotors (MT) die Speicherung von Daten auszulösen, die einen Verdacht auf eine Befüllung des Tanks (RC) mit einer anderen Kraftstoffart als Benzin darstellen.

2. Fahrzeug nach Anspruch 1, **dadurch gekennzeichnet, dass** die gewählte Dauer zwischen 100 Sekunden und 300 Sekunden liegt.

3. Fahrzeug nach Anspruch 1 oder 2, **dadurch gekennzeichnet, dass** es einen Sensor umfasst, der jedes Einführen einer Kraftstoffzufuhrdüse in eine Versorgungsleitung des Tanks (RC) erkennt und jedes Mal, wenn er eine solche Erkennung durchführt, eine spezielle Meldung generiert.

4. Fahrzeug nach Anspruch 1 oder 2, **dadurch gekennzeichnet, dass** der Überwachungscomputer (CS) so angeordnet ist, dass er die Vorgänge ausführt, die darin bestehen, die ersten und zweiten Kraftstoffmengen, die in dem Tank (RC) vorhanden sind, unmittelbar vor der erfassten Füllung und unmittelbar nach a zu vergleichen erneutes Starten der Wärmekraftmaschine (MT) und Erkennen einer Füllung des Tanks (RC), wenn die zweite Menge größer als die erste Menge ist.

5. Fahrzeug nach einem der Ansprüche 1 bis 4, **dadurch gekennzeichnet, dass** bei Vorhandensein von mindestens zwei Einspritzdüsen (IN), die jeweils mindestens zwei Zylinder versorgen, der Überwachungscomputer (CS) so angeordnet ist, dass er die Vorgänge ausführt, die darin bestehen, zu entscheiden, ob diese vorhanden sind eine Fehlfunktion im Falle der Erkennung einer Fehlfunktion in jedem der Zylinder.

6. Fahrzeug nach einem der Ansprüche 1 bis 5, **dadurch gekennzeichnet, dass** der Überwachungscomputer (CS) so ausgelegt ist, dass er die Vorgänge ausführt, die darin bestehen, jede von jeder Einspritzdüse (IN) eingespritzte Kraftstoffmenge zu addieren und zu erkennen, dass der Wärmemotor (MT) eingeschaltet ist) hat den vordefinierten Wert verbraucht, wenn die Summe größer oder gleich diesem vordefinierten Wert wird.

7. Fahrzeug nach einem der Ansprüche 1 bis 6, **dadurch gekennzeichnet, dass** der Überwachungscomputer (CS) dazu eingerichtet ist, die Vorgänge auszuführen, die im Falle der Feststellung einer Fehlfunktion des Wärmemotors (MT) darin bestehen, eine entsprechende Nachricht zu generieren einen Passagier des Fahrzeugs (V) über den Verdacht einer Befüllung des Tanks (RC) mit einer anderen Kraftstoffart als Benzin zu informieren, dann eine Anzeige der Meldung auf mindestens einem im Fahrzeug (V) vorhandenen Bildschirm auszulösen und /oder Aussenden der Nachricht über mindestens einen im Fahrzeug (V) vorhandenen Lautsprecher.

8. Fahrzeug nach einem der Ansprüche 1 bis 7, **dadurch gekennzeichnet, dass** es vom Pkw-Typ ist.

9. Steuerverfahren für ein Fahrzeug (V), das einen Wärmemotor (MT) umfasst, der von mindestens einem Injektor (IN) mit benzinartigem Kraftstoff aus einem Tank (RC) versorgt wird, um Drehmoment für seine Bewegung bereitzustellen, wobei das Verfahren einen Schritt umfasst (10-70), bei dem eine Füllung des Tanks (RC) erfasst wird, dann wird nach dem Neustart des Wärmemotors (MT) festgestellt, wann dieser (MT) eine Kraftstoffmenge verbraucht hat, die einem vordefinierten Wert entspricht, Sobald diese Erkennung durchgeführt wurde, wird dann der Betrieb der Wärmekraftmaschine (MT) für eine ausgewählte Dauer analysiert und im Falle der Erkennung einer Fehlfunktion der Wärmekraftmaschine (MT) Daten übermittelt, die einen Verdacht darstellen den Tank (RC) mit einer anderen Kraftstoffart als Benzin zu füllen.

10. Computerprogrammprodukt, das einen Befehlssatz umfasst, der, wenn er von Verarbeitungsmitteln ausgeführt wird, in der Lage ist, das Steuerverfahren nach Anspruch 9 zur Steuerung in einem Fahrzeug (V) umzusetzen, das einen Verbrennungsmotor (MT) umfasst, der von mindestens einem Injektor versorgt wird (IN) mit benzinartigem Kraftstoff, der aus einem Tank (RC) kommt, um ein Drehmoment zu liefern, um ihn zu bewegen, wenn der Kraftstofftyp, der den Wärmemotor (MT) versorgt, Benzin ist.

## Claims

1. Vehicle (V) comprising a thermal engine (MT) powered by at least one injector (IN) with gasoline type fuel, coming from a tank (RC), to provide torque to move it, and a supervision computer (CS ) controlling the power supply and the operation of said thermal engine (MT), said supervision computer (CS) is arranged to carry out the operations consisting, in the event of detection of filling of said tank (RC), to detect, after a reset in operation of said heat engine (MT), when the latter (MT) has consumed a quantity of fuel equal to a predefined value, then, once this detection has been carried out, to analyze the operation of said heat engine (MT) for a chosen duration, and, in the event of detection of a malfunction of said thermal engine (MT), to trigger storage of data representative of a suspicion of filling of said tank (RC) with a type of fuel other than gasoline.

2. Vehicle according to claim 1, **characterized in that** said chosen duration is between 100 seconds and 300 seconds.

3. Vehicle according to claim 1 or 2, **characterized in that** it comprises a sensor detecting each introduction of a fuel supply nozzle into a supply conduit of said tank (RC) and generating a dedicated message each time it performs such detection.

4. Vehicle according to claim 1 or 2, **characterized in that** said supervision computer (CS) is arranged to carry out the operations consisting of comparing first and second quantities of fuel present in said tank (RC) respectively just before said detected filling and just after a new start-up of said heat engine (MT), and to detect a filling of said tank (RC) when said second quantity is greater than said first quantity.

5. Vehicle according to one of claims 1 to 4, **characterized in that** in the presence of at least two injectors (IN) respectively supplying at least two cylinders, said supervision computer (CS) is arranged to carry out the operations consisting of deciding that there is a malfunction in the event of detection of a malfunction in each of said cylinders.

6. Vehicle according to one of claims 1 to 5, **characterized in that** said supervision computer (CS) is arranged to carry out the operations consisting of adding each quantity of fuel injected by each injector (IN), and to detect that the thermal engine (MT) has consumed said predefined value when said sum becomes greater than or equal to this predefined value.

7. Vehicle according to one of claims 1 to 6, **characterized in that** said supervision computer (CS) is arranged to carry out the operations consisting, in the event of detection of a malfunction of the thermal engine (MT), in generating a message intended to inform a passenger of said vehicle (V) of a suspicion of filling of said tank (RC) with a type of fuel other than gasoline, then to trigger a display of said message on at least one screen present in said vehicle (V) and/or broadcasting of said message by at least one loudspeaker present in said vehicle (V).

8. Vehicle according to one of claims 1 to 7, **characterized in that** it is of the automobile type.

9. Control method for a vehicle (V) comprising a thermal engine (MT) supplied by at least one injector (IN) with gasoline type fuel, coming from a tank (RC), to provide torque to move it, said method comprises a step (10-70) in which a filling of said tank (RC) is detected, then, after restarting of said thermal engine (MT), we detect when the latter (MT) will have consumed a quantity of fuel equal to a predefined value, then, once this detection has been carried out, the operation of said heat engine (MT) is analyzed for a chosen duration, and, in the event of detection of a malfunction of said heat engine (MT), data representative of 'a suspicion of filling said tank (RC) with a type of fuel other than gasoline.

10. Computer program product comprising a set of instructions which, when executed by processing means, is capable of implementing the control method according to claim 9 to control, in a vehicle (V) comprising an engine thermal engine (MT) supplied by at least one injector (IN) with gasoline type fuel, coming from a tank (RC), to provide torque to move it, if the type of fuel supplying said thermal engine (MT) is gasoline.
